# DEMANDE DE BREVET EUROPEEN

(11) **EP 4 556 094 A1**
(43) Date de publication de la demande: **21.05.2025**
(21) Numéro de dépôt: 24205935.0
(22) Date de dépôt: 10.10.2024
(51) Int. Cl.: B01D 53/00, B01D 53/02, F25B 29/00, F25B 15/06, B01D 53/14, F25B 15/04, B01D 53/22, B01D 53/26, F24D 3/18, F24D 10/00, F25J 3/02, F25J 3/06

(54) **PROCÉDÉ ET APPAREIL DE SÉPARATION D'UN MÉLANGE GAZEUX CONTENANT DU DIOXYDE DE CARBONE**

(30) Priorité: 07.11.2023 FR 2312083
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: DUBETTIER-GRENIER, Richard, 75007 PARIS (FR); BIGNAUD, Charles, 75007 PARIS (FR); LECLERC, Mathieu, 75007 PARIS (FR); ROZIERES, Maxime, 75007 PARIS (FR)
(74) Mandataire: Air Liquide

(57) **Abrégé**

Un appareil de séparation d'un mélange gazeux (1, 5) contenant du dioxyde de carbone comprend un compresseur (C), pour comprimer le mélange gazeux, une unité de séparation par au moins une étape de condensation partielle et/ou au moins une étape de distillation(CC), une conduite pour sortir un liquide riche en CO2 (7) de l'unité de séparation, des moyens pour envoyer de l'eau (W1, W2) réchauffée (E1, E2) par échange de chaleur avec le mélange gazeux en amont et/ou en aval du compresseur à un système de chauffage urbain (DH), des moyens pour envoyer de l'eau réchauffée par échange de chaleur avec le mélange gazeux en amont et/ou en aval du compresseur à un groupe frigorifique à absorption ou à absorption (AC) pour produire de l'eau refroidie et un moyen de régulation pour permettre l'envoi de l'eau réchauffée vers le chauffage urbain ou vers le groupe frigorifique en fonction de la température atmosphérique

## Description

La présente invention est relative à un procédé de séparation d'un mélange gazeux contenant du dioxyde de carbone.

La capture et le stockage du dioxyde de carbone est une des seules solutions pour réduire les émissions de dioxyde de carbone des industries, telles que la production d'acier ou de ciment.

Un procédé de séparation d'un mélange gazeux contenant du dioxyde de carbone comprenant les étapes suivantes:
a. Compression du mélange gazeux dans un compresseur jusqu'à une pression supérieure à 2 bar abs, de préférence supérieure à 5 bar abs voire supérieure à 7 bar abs formant du gaz comprimé
b. Introduction du gaz comprimé dans une unité de séparation par perméation, adsorption ou par absorption qui produit un débit enrichi en CO2 à une première pression et un débit appauvri en CO2 à une deuxième pression supérieure à la première pression
c. Séparation du débit enrichi en CO2 par exemple par compression et séparation par condensation partielle et/ou distillation pour produire un liquide riche en CO2 est connu de EP4102163, US2012/111051 et WO06/106253.

Il est connu de DE10046058, EP2873938 et EP3671085 de récupérer de la chaleur pour le chauffage urbain à une température basse, typiquement inférieure à 150°C, habituellement inférieure à 100°C, voire inférieure à 80°C, à partir d'un compresseur d'air d'un appareil de séparation d'air.

Avec la transition énergétique, les besoins en chauffage urbain augmentent et récupérer la chaleur à basse température d'un compresseur est une solution intéressante, particulièrement dans le cas d'un procédé de biomasse qui exporte souvent de la chaleur.

La présente invention prévoit deux modes d'opération, dont un premier mode d'opération, par exemple en hiver, où la chaleur de compression sert au chauffage urbain et un deuxième mode d'opération, par exemple en été, qui utilise la chaleur de compression pour un usage autre que le chauffage urbain.

Il est connu d'utiliser la chaleur d'un débit chaud pour le chauffage urbain en faisant passer le débit chaud dans deux échangeurs de chaleur en série. Le premier échangeur utilise de l'eau chaude (ou un autre fluide adapté) pour refroidir le débit chaud et le deuxième échangeur de chaleur utilise de l'eau pour refroidir le débit chaud refroidi dans le premier échangeur jusqu'à une température plus basse. Selon cette disposition, quand l'eau chaude n'est pas disponible, par exemple quand le chauffage urbain ne fonctionne pas, le refroidissement est fourni entièrement par le deuxième échangeur de chaleur avec de l'eau.

Il est également connu de EP-A-2545335 que la chaleur de compression peut être utilisée pour chauffer de l'eau destinée à une chaudière d'un cycle de vapeur d'eau d'une centrale énergétique.

La présente invention prévoit de valoriser l'eau chaude pendant au moins une période où le chauffage urbain n'est pas requis en l'utilisant comme source de chaleur d'un refroidisseur d'eau à l'absorption ou à l'adsorption et de fournir, avec ce refroidisseur, de l'eau refroidie soit pour un système de refroidissement urbain soit pour condenser et/ou densifier un débit riche en CO2 sous haute pression, soit pour refroidir les fumées contenant le CO2 à capturer (par exemple juste avant leur séchage). Ces deux dernières options permettent de réduire la consommation d'énergie pour un liquéfacteur et/ou une unité de capture de CO2.

La réfrigération par absorption utilise un procédé chimique basé sur la faculté qu'ont certains liquides à absorber et à désorber une vapeur. On utilise deux composants : le composant volatil est porté à ébullition, pour former le fluide frigorigène, et l'autre constitue l'absorbant.

Les couples (mélange binaire) les plus utilisés sont :
- Eau+ bromure de lithium : l'eau étant le fluide frigorigène
- Ammoniac+eau : l'ammoniac étant le fluide frigorigène

Tout comme les machines thermodynamiques à compression les installations à absorptions possèdent les éléments essentiels d'un circuit frigorifique, condenseur, détendeur, évaporateur la seule différence c'est qu'ils possèdent en plus ce qu'on appelle un bouilleur ou désorbeur, et un absorbeur, éléments nécessaires aux réactions chimiques.

La réfrigération par adsorption repose sur l'utilisation d'un adsorbant solide (par exemple du gel de silice) et d'un fluide (par exemple de l'eau). Le fluide s'évapore à une température inférieure à la température humide de l'air pour refroidir de l'eau. Le fluide est adsorbé sur un premier lit d'adsorbant refroidi avec de l'eau à une température proche de la température humide de l'air. Un deuxième lit en parallèle est régénéré en le chauffant avec de l'eau chaude. Le fluide se désorbe à une pression supérieure à la pression d'évaporation. Il est recondensé avec de l'eau à une température proche de la température humide de l'air. Le fluide liquide est renvoyé à l'évaporateur. On inverse les lits de manière cyclique.

L'avantage de ce type de machine frigorifique est qu'il n'y a que peu de pièces en mouvement, ce qui limite les causes de pannes.

Selon un objet de l'invention, il est prévu un procédé de séparation d'un mélange gazeux contenant du dioxyde de carbone comprenant les étapes suivantes:
a. Compression du mélange gazeux dans un compresseur jusqu'à une pression supérieure à 2 bar abs, de préférence supérieure à 5 bar abs voire supérieure à 7 bar abs
b. Séparation du mélange gazeux ou séparation d'un débit enrichi en CO2 produit en séparant le mélange gazeux, la séparation du mélange gazeux ou du débit enrichi en CO2 s'effectuant à une température en dessous de 0°C par au moins une étape de condensation partielle et/ou au moins une étape de distillation et/ou au moins une étape de lavage et/ou au moins une étape de solidification pour produire un liquide et/ou un solide riche en CO2 et un gaz appauvri en CO2,
c. Récupération de la chaleur d'au moins une partie du mélange gazeux en amont et/ou en aval de la compression du mélange gazeux dans le compresseur et
   i. Selon un premier mode d'opération, au moins une partie de la chaleur récupérée sert à chauffer un fluide dans un système de chauffage urbain, le fluide étant chauffé de préférence jusqu'à une température entre 60°C et 150°C et
   ii. Selon un deuxième mode d'opération, au moins une partie de la chaleur récupérée sert de source de chaleur pour un groupe frigorifique à absorption ou à adsorption pour produire du fluide refroidi, par exemple de l'eau refroidie dans lequel le premier mode d'opération est utilisé si la température atmosphérique est inférieure à 15°C, voire 10°C, voire inférieure à 5°C et/ou si la demande en énergie pour le système de chauffage urbain (DH) est supérieure à la demande moyenne et/ou si la température atmosphérique est inférieure à la moyenne annuelle et/ou
le deuxième mode d'opération est utilisé si la température atmosphérique est supérieure à 25°C, voire supérieure à 30°C et/ou si la température atmosphérique supérieure d'au moins 10°C à la température moyenne pour l'année et/ou si la demande en énergie pour le système de refroidissement urbain (DC) est supérieure à un seuil.

Selon d'autres aspects facultatifs :
- le mélange gazeux comprimé est séparé dans une unité de séparation par perméation et/ou par adsorption et/ou par absorption qui produit le débit enrichi en CO2 à une première pression et un débit appauvri en CO2 à une deuxième pression supérieure à la première pression.
- le procédé comprend la récupération de la chaleur d'au moins une partie du mélange gazeux en amont d'une étape de lavage en amont de la compression
- selon le deuxième mode d'opération au moins une partie du fluide refroidi, par exemple de l'eau refroidie sert dans un système de refroidissement urbain, par exemple de climatisation.
- selon le deuxième mode d'opération, au moins une partie du fluide refroidi, par exemple de l'eau refroidie sert à refroidir un débit de CO2 ou d'ammoniac utilisé comme réfrigérant pour refroidir, voire condenser un débit de CO2 gazeux sous une pression d'au moins 60 bar, voire d'au moins 70 bar.
- selon le deuxième mode d'opération, au moins une partie du fluide refroidi, par exemple de l'eau refroidie est utilisée pour refroidir au moins une partie du liquide riche en CO2, par exemple en amont ou en aval d'une étape de pompage.
- le débit enrichi en CO2 et/ou le mélange gazeux contient de l'eau et selon le deuxième mode d'opération au moins une partie du fluide refroidi, par exemple de l'eau refroidie, produit sert à refroidir le débit enrichi en CO2 en amont d'une unité de séchage par adsorption en amont de la séparation par condensation partielle et/ou de distillation et/ou lavage et/ou solidification.
- selon le deuxième mode d'opération au moins une partie du fluide refroidi, par exemple de l'eau refroidie, produit est utilisée pour refroidir au moins un débit envoyé à l'unité de séparation où s'effectue la séparation par condensation partielle et/ou distillation et/ou lavage et/ou solidification
- une partie de la chaleur récupérée pendant le premier mode est utilisée pour réchauffer le gaz appauvri en CO2 en amont d'une détente dans une turbine et une autre partie de la chaleur récupérée pendant le premier mode est utilisée pour le système de chauffage urbain, le rapport entre les parties étant modifiable selon les besoins en chauffage urbain.
- le mélange gazeux contient au moins 10% de CO2, au moins 20% de CO2, au moins 30% de CO2, au moins 40% de CO2, au moins 50% de CO2, au moins 60% de CO2, au moins 70% de CO2, au moins 80% de CO2, au moins 90% de CO2 à base sèche, ces teneurs étant des pourcentages molaires
- le mélange gazeux contient au moins 10% de CO2, au moins 20% de CO2, au moins 30% de CO2, au moins 40% de CO2, au moins 50% de CO2, au moins 60% de CO2, au moins 70% de CO2, au moins 80% de CO2, au moins 90% de CO2 et ne contient pas d'eau, ces teneurs étant des pourcentages molaires.

Selon un autre objet de l'invention, il est prévu un appareil de séparation d'un mélange gazeux contenant du dioxyde de carbone comprenant un compresseur, pour comprimer le mélange gazeux, une unité de séparation par au moins une étape de condensation partielle et/ou au moins une étape de distillation et/ou au moins une étape de lavage et/ou au moins une étape de solidification, l'unité de séparation comprenant des moyens d'isolation thermique pour fonctionner à une température en dessous de 0°C, une conduite pour sortir un liquide et/ou un solide riche en CO2 de l'unité de séparation et une conduite pour sortir un gaz appauvri en CO2 de l'unité de séparation, des moyens pour envoyer de l'eau réchauffée par échange de chaleur avec le mélange gazeux en amont et/ou en aval du compresseur à un système de chauffage urbain, des moyens pour envoyer de l'eau réchauffée par échange de chaleur avec le mélange gazeux en amont et/ou en aval du compresseur à un groupe frigorifique à absorption ou à adsorption pour produire de l'eau refroidie et un moyen de régulation pour permettre l'envoi de l'eau réchauffée vers le chauffage urbain ou vers le groupe frigorifique en fonction de la température atmosphérique ou de la période de l'année et/ou de la demande en énergie pour le système de chauffage urbain et/ou de la demande en énergie pour un système de refroidissement urbain.

L'appareil peut comprendre :
- une unité de séparation par perméation et/ou par adsorption et/ou par absorption pour séparer le mélange gazeux comprimé et qui produit le débit enrichi en CO2 à une première pression et un débit appauvri en CO2 à une deuxième pression supérieure à la première pression.
- selon le deuxième mode d'opération au moins une partie de l'eau refroidie sert dans un système de refroidissement urbain, par exemple de climatisation.
- le moyen de régulation est configuré pour permettre l'envoi de l'eau réchauffée vers le chauffage urbain si la température atmosphérique est inférieure à 15°C, voire 10°C, voire inférieure à 5°C et/ou si la demande en énergie pour le système de chauffage urbain est supérieure à la demande moyenne et/ou si la température atmosphérique est inférieure à la moyenne annuelle.
- le moyen de régulation est configuré pour permettre l'envoi de l'eau réchauffée vers le groupe frigorifique si la température atmosphérique est supérieure à 25°C, voire supérieure à 30°C et/ou si la température atmosphérique supérieure d'au moins 10°C à la température moyenne pour l'année et/ou si la demande en énergie pour le système de refroidissement urbain est supérieure à un seuil.
- l'appareil comprend des moyens pour envoyer au moins une partie de l'eau refroidie pour refroidir un débit de CO2 ou d'ammoniac utilisé comme réfrigérant pour refroidir, voire condenser un débit de CO2 gazeux sous une pression d'au moins 60 bar, voire d'au moins 70 bar.
- l'appareil comprend des moyens pour envoyer au moins une partie de l'eau refroidie pour refroidir au moins une partie du liquide riche en CO2, par exemple en amont ou en aval d'une étape de pompage.
- l'appareil comprend une unité de séchage par adsorption en amont de la séparation par condensation partielle et/ou de distillation et/ou lavage et/ou solidification
- l'appareil comprend des moyens pour envoyer au moins une partie de l'eau refroidie produite pour refroidir le débit enrichi en CO2 en amont de l'unité de séchage
- l'appareil comprend des moyens pour envoyer au moins une partie de l'eau refroidie produite pour refroidir au moins un débit envoyé à l'unité de séparation où s'effectue la séparation par condensation partielle et/ou distillation et/ou lavage et/ou solidification
- l'appareil comprend une turbine et des moyens pour envoyer le gaz appauvri en CO2 se détendre dans la turbine
- l'appareil comprend des moyens pour envoyer une partie de la chaleur récupérée pour réchauffer le gaz appauvri en CO2 en amont d'une détente dans la turbine
- l'appareil comprend des moyens pour varier la quantité de chaleur envoyée pour réchauffer le gaz appauvri en CO2 en amont de la turbine.

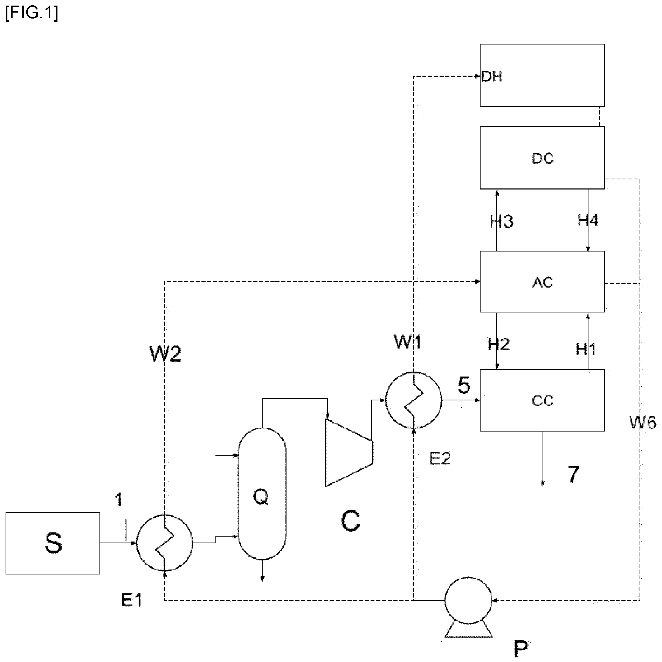

L'invention sera décrite de manière plus détaillée en se référant à la figure où la FIG. 1 représente un procédé selon l'invention de manière schématique.

Un mélange gazeux 1 contenant du CO2 provient d'une source S qui peut être une aciérie, une cimenterie, une unité de combustion (utilisant éventuellement de la biomasse), par exemple une oxycombustion, une gazéification. Le mélange gazeux peut contenir au moins 10% de CO2, au moins 20% de CO2, au moins 30% de CO2, au moins 40% de CO2, au moins 50% de CO2, au moins 60% de CO2, au moins 70% de CO2, au moins 80% de CO2, au moins 90% de CO2 à base sèche si le mélange gazeux contient de l'eau, tous ces pourcentages étant des pourcentages molaires. Le mélange gazeux peut contenir du méthane et/ou du monoxyde de carbone et/ou de l'hydrogène et/ou de l'oxygène et/ou de l'azote et/ou de l'argon et/ou du NOx et/ou de l'eau/ Le mélange gazeux 1 peut se trouver à une température supérieure à 60°C, voire supérieure à 150°C. Le mélange gazeux 1 peut éventuellement être refroidi par un débit d'eau W2 dans un échangeur de chaleur E1 et lavé dans une tour de lavage Q pour enlever des contaminants.

Ensuite le mélange lavé est comprimé dans un compresseur générant de la chaleur et cette chaleur est récupérée dans un échangeur de chaleur E2 pour chauffer un débit d'eau W1 jusqu'à une température entre 60 et 150°C. Le mélange gazeux refroidi 5 est refroidi encore dans une unité de capture de CO2 CC et séparé par au moins une étape de condensation partielle et/ou au moins une étape de distillation et/ou au moins une étape de lavage et/ou au moins une étape de solidification pour produire un liquide et/ou un solide riche en CO2 7 et un gaz appauvri en CO2.

Selon un premier mode, par exemple en hiver et/ou si la température atmosphérique est inférieure à 15°C voire à 10°C, voire inférieure à 5°C et/ou inférieure d'au moins 10°C à la température moyenne pour l'année et/ou si la demande en énergie pour le chauffage urbain est supérieure à la demande moyenne, par exemple supérieure d'au moins 20% à la demande moyenne, le débit d'eau réchauffée W1 est envoyé à un système de chauffage urbain DH où il fournit de la chaleur.

Selon un deuxième mode, par exemple en été si la température atmosphérique est supérieure à 25°C, voire supérieure à 30°C et/ou supérieure d'au moins 10°C à la température moyenne pour l'année et/ou si la demande en énergie pour le chauffage urbain est inférieure à la demande moyenne, par exemple inférieure d'au moins 20% à la demande moyenne et/ou si la demande en énergie pour le refroidissement urbain est supérieure à un seuil.

Le débit d'eau réchauffée W1 n'est plus envoyé au système de chauffage urbain DH mais à un groupe frigorifique à absorption ou à adsorption AC pour produire du fluide refroidi, par exemple de l'eau refroidie H2, H3. Le fluide refroidi, par exemple l'eau refroidie, peut être utilisé à différentes fins, par exemple :
Pour le refroidissement urbain, par exemple un système de refroidissement urbain, la climatisation urbain, DC alimenté par le débit H3, du fluide réchauffé, par exemple le débit d'eau réchauffé H4 étant renvoyé au groupe frigorifique AC

Pour apporter du froid à l'unité de capture de CO2 CC, par exemple pour refroidir le produit liquide 7 riche en CO2 en amont d'une étape de pompage et/ou pour refroidir le mélange gazeux pour condenser de l'eau qu'il contient en amont d'une étape de séchage par adsorption et/ou pour refroidir le mélange gazeux en aval d'une étape de séchage par adsorption et/ou pour apporter du froid à un cycle de réfrigération fermé ou semi-fermé au CO2 ou à l'ammoniac et/ou pour refroidir de l'eau de refroidissement de l'unité de capture CC. Ici le débit de fluide, par exemple de l"eau, refroidi H2 arrive du groupe frigorifique AC, du fluide réchauffé H1, par exemple l'eau H1 réchauffée dans l'unité CC étant renvoyé au groupe frigorifique AC.

Selon le deuxième mode d'opération, au moins une partie du fluide refroidi, par exemple de l'eau refroidie peut servir à refroidir un débit de CO2 ou d'ammoniac utilisé comme réfrigérant, par exemple dans un circuit, pour refroidir, voire condenser un débit de CO2 gazeux sous une pression d'au moins 60 bar, voire d'au moins 70 bar, provenant par exemple d'une une unité de séparation de CO2 par condensation partielle et/ou liquéfaction CC.

Selon le deuxième mode d'opération, au moins une partie du fluide refroidi, par exemple de l'eau refroidie peut être utilisée pour refroidir au moins une partie du liquide riche en CO2, par exemple le liquide 7, par exemple en amont d'une étape de pompage ou après une étape de pompage.

Le deuxième mode peut être utilisé par exemple si la température atmosphérique est supérieure à 25°C, voire supérieure à 30°C et/ou supérieure d'au moins 10°C à la température moyenne pour l'année.

Il peut y avoir un troisième mode dans lequel le débit d'eau réchauffée WI n'est envoyé ni au système de chauffage urbain DH ni au groupe frigorifique à absorption.

En alternatif, l'eau W1 et/ou W2 peut toujours être envoyée soit au système de chauffage urbain DH soit au groupe frigorifique à absorption.

Utiliser du fluide refroidi, par exemple l'eau refroidie, H2, H3 en saison chaude pour refroidir le réfrigérant ou le CO2 produit permet de réduire l'augmentation de la pression de sortie du cycle de liquéfaction du CO2 et/ou de la maintenir constante, même si l'eau de refroidissement disponible devient plus chaude.

Entre l'hiver et l'été, la température de l'air peut varier par exemple de 30°C (par exemple 0°C en hiver et 30°C en été). La température de l'eau de refroidissement utilisée pour refroidir un compresseur de cycle est généralement obtenue grâce à un refroidissement à l'air. La température de l'eau refroidie suit donc les mêmes variations. Si, en utilisant l'invention, on refroidit le compresseur de cycle utilisant du fluide refroidi, par exemple de l'eau refroidie, par le groupe d'adsorption ou d'absorption selon l'invention, on peut réduire la variation de la température de l'eau entre l'été et l'hiver par rapport à celle obtenue avec l'eau refroidie par de l'air ambiant. Or, la température de refroidissement du refroidisseur final du compresseur définit la pression de condensation du fluide du cycle. Ainsi utiliser du fluide refroidi, par exemple de l'eau venant du groupe d'adsorption ou d'absorption en été réduit la gamme de pressions de sortie du compresseur de cycle.

Avec l'invention, la température de condensation du fluide de cycle (CO2) varie d'au plus 10°C et de préférence au plus 7°C entre la température maximale et la température minimale observées pour le fluide de cycle pendant l'année. Cette faible variation permet d'avoir des bons rendements sur tous les points de fonctionnement de la machine

L'eau ayant servi à apporter de la chaleur au groupe frigorifique AC est renvoyée comme débit W6 à une pompe qui distribue l'eau W1, W2 vers les échangeurs E1, E2. Ainsi la chaleur du mélange gazeux 1 peut être récupérée en amont du compresseur dans l'échangeur E1 car le mélange gazeux 1 est parfois à une température élevée. Dans ce cas l'eau W2 réchauffée jusqu'à une température entre 60 et 150°C peut être utilisée à la place de l'eau W1 ou avec de l'eau W1. L'eau W2 ou le mélange de W1 et W2 peut être utilisée exactement comme décrit pour W1 ci-dessus.

En variante, une partie de la chaleur récupérée pendant le premier mode est utilisée pour réchauffer le gaz appauvri en CO2 produit par la capture CC en amont d'une détente dans une turbine et une autre partie de la chaleur récupérée pendant le premier mode est utilisée pour le chauffage urbain DH, le rapport entre les parties étant modifiable selon les besoins en chauffage urbain.

Dans une variante de l'invention, qui n'est pas illustrée, le mélange gazeux comprimé 5 est séparé par perméation (à température ambiante ou subambiante) et/ou par adsorption (TSA ou PSA) et/ou par absorption (lavage par un solvant tel que carbonate de potassium) ou tout autre moyen adapté, qui produit le débit enrichi en CO2 à une première pression et un débit appauvri en CO2 à une deuxième pression supérieure à la première pression.

Dans ce cas, le mélange 5 est séparé produisant un débit enrichi en CO2 à une première pression et un débit appauvri en CO2 à une deuxième pression supérieure à la première pression. C'est le débit enrichi en CO2 (ou éventuellement le débit appauvri en CO2), au lieu du mélange comprimé 5, qui est séparé dans l'unité de capture CC.

Selon une variante, une partie de la chaleur récupérée pendant le premier mode peut être utilisée pour réchauffer le gaz appauvri en CO2 produit par la capture CC ou le débit appauvri en CO2 à la deuxième pression en amont d'une détente dans une turbine pour générer de l'électricité ou pour entraîner un compresseur. Une autre partie de la chaleur récupérée pendant le premier mode est utilisée pour le chauffage urbain DH, le rapport entre les parties étant modifiable selon les besoins en chauffage urbain. Les débits d'eau W1, W2 peuvent être envoyés au système de chauffage urbain DH séparément, par exemple à différentes périodes ou en étant mélangés.

Les débits d'eau W1, W2 peuvent être envoyés au groupe frigorifique AC séparément, par exemple à différentes périodes ou en étant mélangés.

Il sera compris que les références à l'hiver et à l'été ici concernent les saisons météorologiques. L'eau W1, W2, W6 peut contenir du glycol ou un autre additif pour réduire le risque de gel.

## Revendications

1. Procédé de séparation d'un mélange gazeux (1, 5) contenant du dioxyde de carbone comprenant les étapes suivantes:
a. Compression du mélange gazeux dans un compresseur (C) jusqu'à une pression supérieure à 2 bar abs, de préférence supérieure à 5 bar abs voire supérieure à 7 bar abs
b. Séparation du mélange ou séparation d'un débit enrichi en CO2 produit en séparant le mélange, la séparation du mélange ou du débit enrichi en CO2 s'effectuant à une température en dessous de 0°C par au moins une étape de condensation partielle et/ou au moins une étape de distillation et/ou au moins une étape de lavage et/ou au moins une étape de solidification (CC) pour produire un liquide et/ou un solide riche en CO2 (7) et un gaz appauvri en CO2,
c. Récupération de la chaleur (E1, E2) d'au moins une partie du mélange gazeux en amont et/ou en aval de la compression du mélange gazeux dans le compresseur et
i. Selon un premier mode d'opération, au moins une partie de la chaleur récupérée sert à chauffer un fluide (W1, W2) dans un système de chauffage urbain (DH), le fluide étant chauffé de préférence jusqu'à une température entre 60°C et 150°C et
ii. Selon un deuxième mode d'opération, au moins une partie de la chaleur récupérée sert de source de chaleur pour un groupe frigorifique à absorption ou à adsorption (AC) pour produire un fluide refroidi, par exemple de l'eau refroidie (H2, H3), dans lequel le premier mode d'opération est utilisé si la température atmosphérique est inférieure à 15°C, voire 10°C, voire inférieure à 5°C et/ou si la demande en énergie pour le système de chauffage urbain (DH) est supérieure à la demande moyenne et/ou si la température atmosphérique est inférieure à la moyenne annuelle et/ou
le deuxième mode d'opération est utilisé si la température atmosphérique est supérieure à 25°C, voire supérieure à 30°C et/ou si la température atmosphérique supérieure d'au moins 10°C à la température moyenne pour l'année et/ou si la demande en énergie pour le système de refroidissement urbain (DC) est supérieure à un seuil.

2. Procédé selon la revendication 1 dans lequel le mélange gazeux comprimé (5) est séparé dans une unité de séparation par perméation et/ou par adsorption et/ou par absorption qui produit le débit enrichi en CO2 à une première pression et un débit appauvri en CO2 à une deuxième pression supérieure à la première pression.

3. Procédé selon la revendication 1 ou 2 dans lequel selon le deuxième mode d'opération au moins une partie du fluide refroidi, par exemple de l'eau refroidie sert dans un système de refroidissement urbain (DC), par exemple de climatisation.

4. Procédé selon une des revendications précédentes dans lequel selon le deuxième mode d'opération, au moins une partie du fluide refroidi, par exemple de l'eau refroidie (H2, H3) sert à refroidir un débit de CO2 ou d'ammoniac utilisé comme réfrigérant pour refroidir, voire condenser un débit de CO2 gazeux (7) sous une pression d'au moins 60 bar, voire d'au moins 70 bar.

5. Procédé selon une des revendications précédentes dans lequel selon le deuxième mode d'opération, au moins une partie du fluide refroidi, par exemple de l'eau refroidie (H2, H3) est utilisée pour refroidir au moins une partie du liquide riche en CO2 (7), par exemple en amont ou en aval d'une étape de pompage.

6. Procédé selon l'une des revendications précédentes dans lequel le débit enrichi en CO2 et/ou le mélange gazeux (1, 5) contient de l'eau et selon le deuxième mode d'opération au moins une partie du fluide refroidi, par exemple de l'eau refroidie (H2, H3), produit sert à refroidir le débit enrichi en CO2 en amont d'une unité de séchage par adsorption en amont de la séparation par condensation partielle et/ou de distillation et/ou lavage et/ou solidification (CC).

7. Procédé selon l'une des revendications précédentes dans lequel selon le deuxième mode d'opération au moins une partie du fluide refroidi, par exemple de l'eau refroidie produit (H2, H3) est utilisée pour refroidir au moins un débit envoyé à l'unité de séparation où s'effectue la séparation par condensation partielle et/ou distillation et/ou lavage et/ou solidification (CC).

8. Procédé selon l'une des revendications précédentes dans lequel une partie de la chaleur récupérée pendant le premier mode est utilisée pour réchauffer le gaz appauvri en CO2 en amont d'une détente dans une turbine et une autre partie de la chaleur récupérée pendant le premier mode est utilisée pour le système de chauffage urbain (DH), le rapport entre les parties étant modifiable selon les besoins en chauffage urbain.

9. Appareil de séparation d'un mélange gazeux (1, 5) contenant du dioxyde de carbone comprenant un compresseur (C), pour comprimer le mélange gazeux, une unité de séparation par au moins une étape de condensation partielle et/ou au moins une étape de distillation et/ou au moins une étape de lavage et/ou au moins une étape de solidification (CC), l'unité de séparation comprenant des moyens d'isolation thermique pour fonctionner à une température en dessous de 0°C, une conduite pour sortir un liquide et/ou un solide riche en CO2 (7) de l'unité de séparation et une conduite pour sortir un gaz appauvri en CO2 de l'unité de séparation, des moyens pour envoyer de l'eau (W1, W2) réchauffée (E1, E2) par échange de chaleur avec le mélange gazeux en amont et/ou en aval du compresseur à un système de chauffage urbain (DH), des moyens pour envoyer de l'eau réchauffée par échange de chaleur avec le mélange gazeux en amont et/ou en aval du compresseur à un groupe frigorifique à absorption ou à adsorption (AC) pour produire de l'eau refroidie et un moyen de régulation pour permettre l'envoi de l'eau réchauffée vers le chauffage urbain ou vers le groupe frigorifique au choix en fonction de la température atmosphérique ou de la période de l'année et/ou de la demande en énergie pour le système de chauffage urbain et/ou de la demande en énergie pour un système de refroidissement urbain (DC).

10. Appareil selon la revendication 9 comprenant une unité de séparation par perméation et/ou par adsorption et/ou par absorption pour séparer le mélange gazeux comprimé et qui produit le débit enrichi en CO2 à une première pression et un débit appauvri en CO2 à une deuxième pression supérieure à la première pression.

11. Appareil selon la revendication 9 ou 10 dans lequel selon le deuxième mode d'opération au moins une partie de l'eau refroidie sert dans un système de refroidissement urbain, par exemple de climatisation.

12. Appareil selon l'une des revendications 9 à 11 comprenant des moyens pour envoyer au moins une partie de l'eau refroidie pour refroidir un débit de CO2 ou d'ammoniac utilisé comme réfrigérant pour refroidir, voire condenser un débit de CO2 gazeux sous une pression d'au moins 60 bar, voire d'au moins 70 bar.

13. Appareil selon l'une des revendications 9 à 12 comprenant des moyens pour envoyer au moins une partie de l'eau refroidie pour refroidir au moins une partie du liquide riche en CO2, par exemple en amont ou en aval d'une étape de pompage.

14. Appareil selon l'une des revendications 9 à 13 comprenant une unité de séchage par adsorption en amont de la séparation par condensation partielle et/ou de distillation et/ou lavage et/ou solidification (CC).

15. Appareil selon l'une des revendications 9 à 14 comprenant des moyens pour envoyer au moins une partie de l'eau refroidie produite pour refroidir le débit enrichi en CO2 en amont de l'unité de séchage.
